# EUROPÄISCHE PATENTSCHRIFT

(11) **EP 0 315 094 B1**
(45) Veröffentlichungstag und Bekanntmachung des Hinweises auf die Patenterteilung: **05.05.1993**
(21) Anmeldenummer: 88118068.1
(22) Anmeldetag: 29.10.1988
(51) Int. Cl.: B23B 27/16

(54) **Klemmhalter**
Bit-holder
Porte-plaquette

(30) Priorität: 03.11.1987 DE 3737189
(43) Veröffentlichungstag der Anmeldung: 10.05.1989
(73) Patentinhaber: Suxdorf, Hans, D-40549 Düsseldorf (DE)
(72) Erfinder: Suxdorf, Hans, D-40549 Düsseldorf (DE)
(74) Vertreter: König, Reimar, Dr.-Ing.

(56) Entgegenhaltungen:
- DE-A- 2 108 910
- DE-B- 1 477 396
- US-A- 3 137 059

## Beschreibung

Die Erfindung betrifft einen Klemmhalter mit einer Schneidplatte, insbesondere einer Wendeschneidplatte, der mit einer Längs- und einer in diese mündenden Abzweigbohrung und mit in den Bohrungen aufgefüllten Druckstücken versehen ist sowie in der Abzweigbohrung eine Druckschraube aufweist, die beim Anziehen die Druckstücke gegen einen Spannbolzen bewegt, der durch eine Schneidplattenbohrung gesteckt ist, in einer Querbohrung endet, eine Hohlkehlenaussparung und einen kleineren Durchmesser als die Querbohrung besitzt.

Wendeschneidplatten, die nicht nachgeschliffen werden (Wegwerfplatten), kommen in großer Zahl in der spanenden Fertigung zur Verwendung wie beispielsweise für Dreh-, Hobel- und Fräswerkzeuge. Es sind dreieckige und quadratische Platten mit und ohne Werkzeugfreiwinkel genormt (vgl. DIN 4968, Blatt 1 und 3), oder rhombische Wendeschneidplatten für Halter mit positiven und negativen Spanwinkel bekannt. Die rhombischen Wendeschneidplatten werden insbesondere für Kopierdrehwerkzeuge verwendet, wobei es zum Kopierdrehen erforderlich ist, daß die Schneidplatten genau auf Werkstückmitte eingestellt werden und ihr Schneidenradius mit dem des Fühlers übereinstimmt.

Ein Klemmhalter der eingangs genannten Art ist durch die deutsche Offenlegungsschrift 21 08 910 bekanntgeworden. Zum Festklemmen bzw. -spannen der Wendeschneidplatte legen sich in der Längsbohrung zwischen der spannschraube und dem als Klemmhebel ausgebildeten Spannbolzen eingeschlossene Stahlkugeln und/oder keilförmige Zwischenstücke gegen den Klemmhebel. Und zwar greift die vorderste Kugel oder die Spitze eines keilförmigen Zwischenstückes in eine Nut des Klemmhebels ein, der dazu mit einem Endabschnitt bis in die Längsbohrung vorkragt. Es läßt sich somit nicht vermeiden, daß das vorkragende Klemmhebelende beim spannen einem erheblichen Biegemoment ausgesetzt ist. Abgesehen davon, daß dei völlig in die Schneidplattenbohrung eingetauchte, einen kleineren Durchmesser als die Bohrung aufweisende Klemmhebelkopf beim Spannen gekippt wird und damit eine Schräglage einnimmt, die allenfalls eine linienförmige bzw. gar nur punktförmige Anlage des Klemmhebelkopfes an der Schneidplatte ermöglicht und damit keinen - in Anbetracht der außerordentlich hohen Beanspruchungen - sicheren Sitz der Wendeschneidplatte gewährleistet, lassen sich weiterhin erhebliche Schwierigkeiten beim Wechseln der Schneidplatte nicht vermeiden. Denn das in der Einbaulage eine Drehachse definierende, dickbauchige Mittelstück des Klemmhebels zieht sich beim Spannen unter der Kraft der über die Spannschraube beaufschlagten Kugeln unvermeidlich tiefer in die Querbohrung hinein und verkeilt bzw. verklemmt sich dort. Das zum Wechseln der Schneidplatte erforderliche Herausnehmen des Klemmhebels aus der Querbohrung wird auch dadurch noch beeinträchtigt, daß über die stirnseitig offene Längsbohrung Späne und/oder Schneidöl sowie andere Schmutzpartikel ungehindert bis zum Klemmhebel gelangen und diesen blockieren können.

Um einen sicheren Sitz der Schneidplatte dieses bekannten Klemmstahlhalters zu ermöglichen, müßte zusätzlich eine Klemm- bzw. Spannpratze eingesetzt werden. Zum mechanischen Klemmen der Wendeschneidplatten ist es nämlich bekannt, die Klemmhalter entweder mit Spannexzentern und/oder den genannten Klemm- bzw. Spannpratzen zu versehen, mit denen die Schneidplatte auf einer Auflageplatte im Haltesitz geklemmt wird. Beim Exzenterspannen hat sich dabei in der Praxis erwiesen, daß die Klemmkraft bei großem Vorschub nicht ausreicht, die Wendeschneidplatte in ihrem Sitz bzw. ihrer Lage zu halten. Ein Nachteil der Klemm- bzw. Spannpratzen liegt auch darin, daß sie einem Abfließen des Spans entgegenstehen, vielmehr den Span gegebenenfalls in Richtung auf die bearbeitete Oberfläche des Werkstückes ablenken. Außerdem läßt es sich nicht vermeiden, daß sich Staubkörnchen unter die mittels Schrauben befestigten großen Auflageplatten setzen und beim Spanen Rattermarken hervorrufen.

Der Erfindung liegt daher die Aufgabe zugrunde, einen Klemmhalter, insbesondere für Wendeschneidplatten, ohne die vorgenannten Nachteile zu schaffen.

Diese Aufgabe wird erfindungsgemäß dadurch gelöst, daß bei einem Klemmhalter der eingangs erwähnten Art in einem endseitigen Gewindeabschnitt der Längsbohrung eine Stellschraube angeordnet ist und sowohl die Druck- als auch die stellschraube beim Anziehen die Druckstücke gegen den Spannbolzen bewegen, der einen die Schneidplattenbohrung radial übergreifenden Bolzenkopf aufweist, wobei die Hohlkehlenaussparung und das vorderste Druckstück so ausgebildet sind, daß der Bolzenkopf beim Anziehen nach unten gezogen wird. Von den vorstehenden Maßnahmen läßt sich mit der endseitig in die Längsbohrung eingeschraubten Stellschraube nicht nur verhindern, daß Schmutzpartikel bis zu dem Spannbolzen gelangen, wobei sich sogar eine völlige Abkapselung ergibt, wenn die den Spannbolzen aufnehmende Querbohrung als Sackbohrung ausgebildet ist, sondern es stellt sich ein gegenüber allen bekannten Klemmhaltern hervorstechender Vorteil ein. Dadurch nämlich, daß sowohl in der Längsbohrung als auch in der Abzweigbohrung eine die Druckstücke beaufschlagende Spannschraube angeordnet ist, die beide - quasi mit sich kreuzenden Kraftvektoren auf - den Spannbolzen einwirken, läßt sich eine Wendeschneidplatte durch Einschrauben lediglich einer der beiden Spannschrauben festklemmen. Die Schneidplatte kann somit wahlweise entweder von der einen oder von der anderen Seite gespannt oder gelöst und ausgetauscht oder gewendet werden. Beim Wechseln der Schneidplatte bleibt der Klemmhalter in seiner in der Werkzeugmaschine einmal eingestellten Lage, da nämlich immer eine der beiden Spannschrauben für eine Bedienungsperson zugänglich ist.

Der die Schneidplattenbohrung radial übergreifende Bolzenkopf gewährleistet einen formschlüssigen, die Schneidplatte sicher in ihren Sitz ziehenden Eingriff des Spannbolzens in die Schneidplatte. In der Schneidlage hält das Druckstück den ansonsten mit einer Pendelfreiheit von 3/10 bis 4/10 mm in der Querbohrung angeordneten - was einen den Ausbau des Spannbolzens beeinträchtigenden Klemmsitz in der Querbohrung ausschließt - fest in Anlage gegen die dem Druckstück gegenüberliegende Wand der Bohrung. Durch die Anlage des Bolzens treten schließlich auch keine Biegemomente auf. Durch das Eingreifen des formangepaßten Kugelkopfes des Druckstückes in die Hohlkehlenaussparung des Bolzens läßt sich die Anzugskraft des Druckstückes vorteilhaft als nach unten gerichtete, die Wendeschneidplatte im Haltersitz klemmende Zugkraft in den Bolzen einleiten.

Es empfiehlt sich, die Längs- und die Querbohrung schräg verlaufen zu lassen. Aufgrund der Neigung der Längsbohrung zur Querbohrung, wobei die Querbohrung vorzugsweise unter einem Winkel von etwa 4 bis 5° zur Vertikalachse und die Längsbohrung unter einem Winkel von etwa 4° zur Horizontalachse verläuft, läßt sich beim Beaufschlagen des vorteilhaft einen mit der Hohlkehlenaussparung korrespondierenden Kugelkopf aufweisenden Druckstückes eine große, die Wendeschneidplatte entsprechend in ihrem Haltersitz klemmende Zugkraft auf den Bolzen übertragen.

Vorzugsweise weist der Bolzen einen in eine Kugelpfanne der Bohrung der Schneidplatte eingreifenden Kalottenkopf auf. Beim Klemmen der Wendeschneidplatte durch Einleiten der Zugkraft in den Bolzen zentriert sich die Kalotte des Bolzenkopfes in einer stets definierten Lage in der Kugelpfanne, so daß diese Klemmung wegen der großen Anforderungen an die genaue Lage der Wendeschneidplatte insbesondere für Kopierdrehwerkzeuge zusätzliche Vorteile mit sich bringt. Ein Lösen der Wendeschneidplatte in ihrem Haltersitz wird durch das Ineinandergreifen des Kalottenkopfes des Bolzens und der Kugelpfanne der Wendeschneidplatte sicher verhindert. Außerdem kann der Span ungehindert über die Wendeplatte abfließen und gelangt somit nicht mehr an das Werkstück.

Der Hohlkehlenaussparung des Bolzens schließt sich vorteilhaft ein ballengriffartig geformter Endabschnitt an. Demzufolge legt sich der Ballengriff des Bolzens mit einem definierten Anpreßpunkt gegen die der Wirkrichtung des Druckstückes gegenüberliegende Wand in der Querbohrung, so daß aufgrund der dabei erreichten punktförmigen Anlage der Reibungskoeffizient sehr niedrig ist. Vorteilhaft kann auch der Abschnitt des Bolzens oberhalb der Hohlkehlenaussparung ballig sein und vorzugsweise einen gegenüber dem balligen Endabschnitt geringfügig größeren Durchmesser besitzen. Es tritt dann, wenn sich der obere Ballen an die Bohrung anlegt, ein die Wendeschneidplatte nach innen, d.h. in ihren Sitz ziehendes Moment auf; die Zugkraft bzw. die Spannung läßt sich somit verbessern.

Es empfiehlt sich, daß das Druckstück aus zumindest einem gleitbeweglich in der Längsbohrung geführten Distanzstift und mehreren in der Längsbohrung zwischen der Querbohrung und dem Distanzstift angeordneten Kugeln sowie in der Abzweigbohrung angeordneten Kugeln besteht. Damit ergibt sich eine Kugelspannung, deren Spannkraft sich über beliebig lange, gegebenenfalls Umlenkungen enthaltende Strecken durch Beeinflussen bzw. Verändern der Lage lediglich einer Kugel des Kugelmagazins übertragen läßt. Denn durch die Einstellschraube und den Distanzstift ist die Bewegungsfreiheit der Kugeln in der Längsbohrung in einer Richtung begrenzt, so daß sich die Lageveränderung der von der Druckschraube beaufschlagten Kugel beim Einschrauben der Druckschraube in die entgegengesetzte Richtung, d.h. in Richtung auf den Bolzen fortpflanzt und dort die Zugkraft zum Klemmen der Wendeschneidplatte erzeugt. Aufgrund der balligen Bolzenabschnitte und der schrägverlaufenden Bohrungen läßt sich eine so große Spannkraft erzeugen, daß kein Luftspalt zwischen der Wendeschneidplatte und der Auflage im Klemmhalter auftritt; Rattermarken werden vermieden. Da der Durchmesser der Längsbohrung oder der Abzweigbohrung im Mündungsbereich zur Querbohrung kleiner als der Durchmesser der Kugeln ist, läßt sich verhindern, daß die Kugeln in die Querbohrung gelangen.

Wenn der Klemmhalter Schneidplattensitze für zumindest zwei parallel mit Abstand nebeneinander angeordnete Wendeschneidplatten besitzt, lassen sich die Rüst- und Bearbeitungszeiten für ein zu spanendes Werkstück erheblich verringern. Zum Bearbeiten beispielsweise der beiden Enden eines rotationssymmetrischen Werkstückes können dann nämlich beide Werkstückenden gleichzeitig bearbeitet werden; d.h., es braucht die Werkzeugmaschine nur einmal eingerichtet und das Werkstück dann auch nicht mehr gewendet zu werden.

Die Erfindung wird nachfolgend anhand von in der Zeichnung dargestellten Ausführungsbeispielen des näheren erläutert. In der Zeichnung zeigen:
- Fig. 1: einen ersten Klemmhalter mit Kugelspannung im Querschnitt;
- Fig. 2: als Einzelheit den in Fig. 1 mit einem strichpunktierten Kreis und "A" gekennzeichneten Teil des Klemmhalters;
- Fig. 3: als Einzelheit den in Fig. 1 mit einem strichpunktierten Kreis und "B" gekennzeichneten Teil des Klemmhalters;
- Fig. 4: als Einzelheit den Klemmhalter in Richtung des Pfeiles "C" von Fig. 1 gesehen;
- Fig. 5: eine Wendeplatte mit einer zentrischen Bohrung und stirnseitigen Kugelpfannen;
- Fig. 6: einen Schnitt entlang der Linie VI-VI in Fig. 5;
- Fig. 7: als zweite Ausführung einen Tangential-Klemmhalter in der Stirnansicht von der Wendeschneidplatte her gesehen;
- Fig. 8: einen Querschnitt des Tangential-Klemmhalters gemäß Fig. 7;
- Fig. 9: einen weiteren, als Doppel-Schneidplattenhalter ausgebildeten Klemmhalter mit zwei parallel mit Abstand nebeneinander angeordneten Wendeschneidplatten;
- Fig. 10: den Klemmhalter gemäß Fig. 9 entlang der Linie X-X geschnitten;

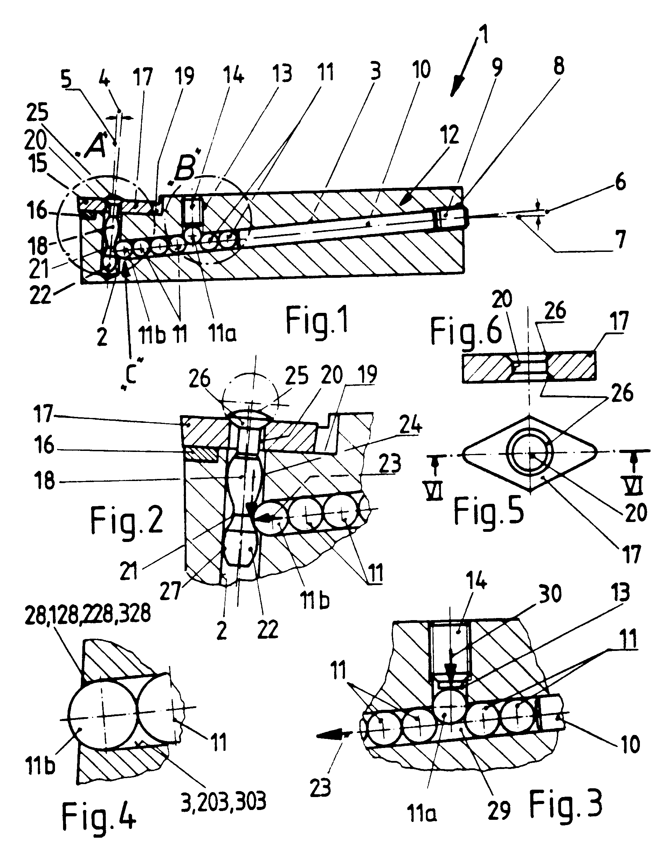

Gemäß Fig. 1 sind in einem Klemmhalter 1 eine schrägverlaufende Querbohrung 2 und eine in die Querbohrung 2 mündende, schrägverlaufende Längsbohrung S angeordnet. Die Bohrungen 2, 3 schließen einen Winkel von weniger als 90° ein, wobei die Querbohrung 2 unter einem Winkel 4 von etwa 4 bis 5° zur Vertikalachse 5 und die Längsbohrung 3 unter einem Winkel 6 von etwa 4° zur Horizontalachse 7 verläuft. Die Längsbohrung 3 besitzt einen endseitigen Gewindeabschnitt 8 mit einer eingeschraubten Stellschraube 9; die Schraube 9 liegt einem Distanzstift 10 an, dem sich die Längsbohrung 3 bis zur Querbohrung 2 auffüllende Kugeln 11 anschließen. Die Schraube 9 bildet mit dem Distanzstift 10 und den Kugeln 11 ein Druckstück 12, das alternativ auch einteilig sein kann. Im Bereich der Kugeln 11 ist im Klemmhalter 1 eine in die Längsbohrung 3 übergehende Abzweigbohrung 13 mit einer eingeschraubten Druckschraube 14 angeordnet; die Druckschraube 14 wirkt mit einer der Kugeln 11a der ein Kugelmagazin bildenden Kugeln 11 zusammen.

Eine sich im Bereich einer Schneidkante 15 auf einer Auflageplatte 16 abstützende Wendeschneidplatte 17 wird von einem Bolzen 18 in einem Schneidplattensitz 19 des Klemmhalters 1 geklemmt. Wie im einzelnen in Fig. 2 dargestellt ist, durchdringt der Bolzen 18 eine Durchgangsbohrung 20 der Wendeschneidplatte 17 und ragt bis in die ebenso wie die Schneidplattenbohrung 20 im Durchmesser gegenüber dem Bolzen 18 größere Querbohrung 2 hinein. Das in die Querbohrung 2 hineinragende Ende des Bolzens weist eine Hohlkehlenaussparung 21 sowie einen als Ballengriff geformten Endabschnitt 22 auf. Die Hohlkehlenaussparung 21 korrespondiert mit der vordersten Kugel 11b der das Kugelmagazin bildenden Kugeln 11.

In der in den Fig. 1 und 2 dargestellten Klemmlage wird die von der Druckschraube 14 (Fig. 1) über die Kugel 11a auf die Kugeln 11 und 11b in Pfeilrichtung 23 aufgebrachte Druckkraft in den Bolzen 18 eingeleitet. Aufgrund des Eingriffs der vordersten Kugel 11b wird die Druckkraft - unterstützt durch den Schrägverlauf der die Kugeln aufnehmenden Längsbohrung 3 - von oben nach unten gemäß Pfeil 24 als Zugkraft in die Hohlkehlenaussparung 21 des Bolzens 18 eingeleitet, und zwar im Berührungspunkt von Kugel 11b und Hohlkehlenaussparung 21. Die Zugkraft bewirkt, daß sich der Bolzen 18 einerseits in Pfeilrichtung 24 in die Querbohrung 2 hineinzieht und dabei mit seinem als Kalotte 25 ausgebildeten Kopf lagesicher und die Wendeplatte 17 in ihrem Sitz 19 zentrierend in eine Kugelpfanne 26 am stirnseitigen Ende der Durchgangsbohrung 20 der Wendeschneidplatte 17 eingreift sowie andererseits der Bolzen 18 in Pfeilrichtung 23 bis gegen die gegenüberliegende Bohrungswand der Querbohrung 2 gedrückt wird, wobei sich der Ballengriff mit einem definierten Anpreßpunkt 27 gegen die Bohrungswand legt. Wie in der Fig. 6 dargestellt ist, besitzt die Wendeschneidplatte 17 an beiden stirnseitigen Enden der Durchgangsbohrung 20 eine Kugelpfanne 26. Damit die Kugeln 11, 11a, 11b nicht in die Querbohrung 2 gelangen können, ist die in die Querbohrung 3 übergehende Mündung 28 der Längsbohrung 3 (vgl. Fig. 4) im Durchmesser kleiner als die Kugeln.

Zum Klemmen der Wendeschneidplatte 17 im Sitz 19 wird der Bolzen 18 bei gelöster Druckschraube 14, so daß die Kugeln 11, 11a, 11b Platz zum Ausweichen haben, wobei die Kugeln 11, 11b entgegen der Pfeilrichtung 23 und die Kugel 11a quer dazu in die Abzweigbohrung 13 entweichen, durch die Bohrung 20 der Wendeschneidplatte 17 bis in die Querbohrung 2 hineinragend gesteckt. Schon bei einem kleinen Haltedruck auf den Kalottenkopf 25 des Bolzens 18 mittels des Daumens einer Bedienungsperson kann dann die in Fig. 3 vergrößert dargestellte Druckschraube 14 bis in die gezeichnete Position, d.h. tiefer in die Abzweigbohrung 13 geschraubt werden. Die von der Druckschraube 14 beaufschlagte Kugel 11a schiebt sich dabei in eine Lücke 29 zwischen den Kugeln 11 des Kugelmagazins, wobei sich die der Kugel 11a benachbarten Kugeln 11 beidseits der Wirkrichtung 30 verlagern. Da der Weg der Kugeln 11 in die der Querbohrung 2 abgewandte Richtung durch den Distanzstift 10 begrenzt wird, pflanzt sich folglich die Druckkraft der Schraube 14 gemäß Pfeil 23 in Richtung auf die Querbohrung 2 fort und zieht den Bolzen 21 - wie zuvor beschrieben - in die Klemmlage.

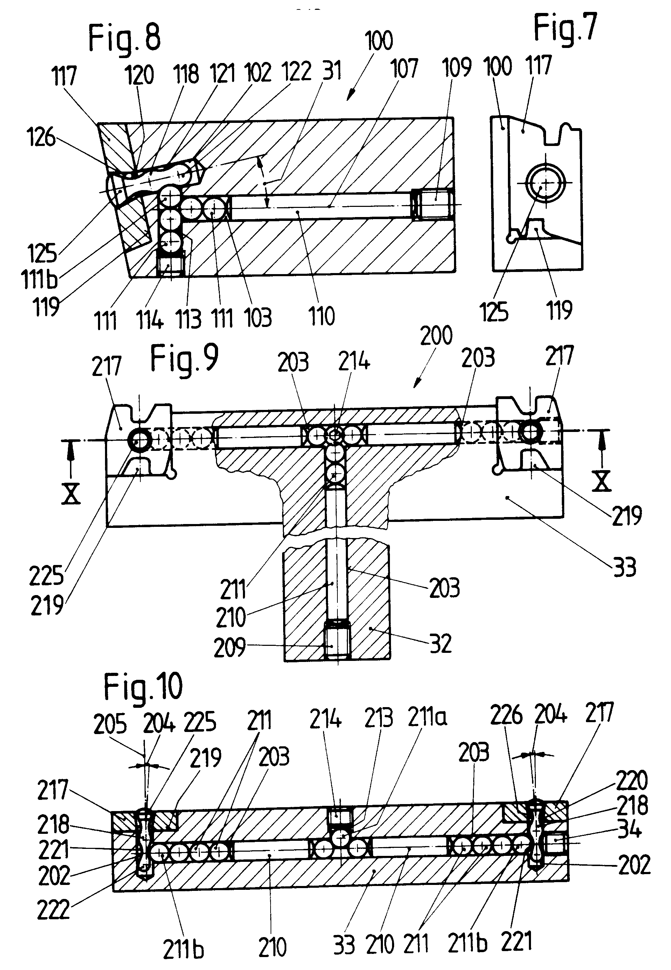

Bei der Ausführung gemäß den Fig. 7 und 8 handelt es sich um einen Tangential-Klemmhalter 100; die Wendeschneidplatte 117 ist dort in einem stirnseitigen Plattensitz 119 festgeklemmt. Die die endseitige Stellschraube 109 sowie den Distanzstift 110 und die Kugeln 111 aufnehmende Längsbohrung 103 erstreckt sich horizontal bis in die dazu rechtwinklig verlaufende, in die Querbohrung 102 mündende Abzweigbohrung 113. Beim Einschrauben entweder der Schraube 109 oder der Schraube 114 wird die in der Abzweigbohrung 113 vorderste Kugel 111b in die Hohlkehlenaussparung 121 des Spannbolzens 118 gedrückt. Der Bolzen 118 zieht sich dabei tiefer in die in diesem Fall unter einem Winkel 31 zur Horizontalachse 107 verlaufende Querbohrung 102 hinein; der kalottenförmige Bolzenkopf 125 zentriert sich dabei flächig in der Kugelpfanne 126 der Wendeschneidplatte 117.

In den Fig. 9 und 10 ist ein Klemmhalter 200 für zwei parallel mit Abstand nebeneinander angeordnete Wendeschneidplatten 217 dargestellt. Er ist T-förmig ausgebildet und besitzt einen stegartigen Schaft 32, mit den der Klemmhalter 200 in einer nicht dargestellten Werkzeugmaschine befestigt wird, und einen an seinen Enden mit den Schneidplattensitzen 219 versehenen Quersteg 33. Die Längsbohrung 203 erstreckt sich durch den Schaft 32 bis in den Quersteg 33; sie zweigt sich im Kreuzungsbereich mit der den Quersteg 33 von oben durchdringenden, mit der Druckschraube 214 versehenen Abzweigbohrung 213 rechtwinklig nach links und nach rechts ab und erstreckt sich bis zu den Querbohrungen 202 für die Spannbolzen 218 zum Festklemmen der beiden endseitigen Wendeschneidplatten 217 in ihren Sitzen 219. Beim Einschrauben der Druckschraube 209 der Längsbohrung 203 oder der Druckschraube 214 der Abzweigbohrung 213 überträgt sich die Druckkraft über die Distanzstifte 210 und die Kugeln 211 in Richtung auf die beiden endseitig des Quersteges 33 angeordneten Spannbolzen 218, wobei sich jeweils die in den Abzweigbohrungen 203 vordersten Kugeln 211b in die Hohlkehlenaussparung 221 drücken. Eine Stiftschraube 34 verschließt den in den Fig. 9, 10 nach rechts verlaufenden Zweigkanal 203; nach dem Entfernen der Stiftschraube 34 lassen sich die Zweigbohrungen 203 mit den Kugeln 211 und Distanzstiften 210 bestücken.

## Patentansprüche

1. Klemmhalter (1, 100, 200) mit einer Schneidplatte, insbesondere einer Wendeschneidplatte (17, 117, 217), der mit einer Längs- und einer in diese mündenden Abzweigbohrung (3, 13; 103, 113; 203, 213) und in den Bohrungen (3, 13; 103, 113; 203, 213) aufgefüllten Druckstücken (10, 11; 110, 111; 210, 211) versehen ist sowie in der Abzweigbohrung eine Druckschraube (14, 114, 214) aufweist, die beim Anziehen die Druckstücke gegen einen Spannbolzen (18, 118, 218) bewegt, der durch eine Schneidplattenbohrung (20, 120, 220) gesteckt ist, in einer Querbohrung (2, 102, 202) endet, eine Hohlkehlenaussparung (21, 121, 221) und einen kleineren Durchmesser als die Querbohrung besitzt, dadurch gekennzeichnet, daß in einem endseitigen Gewindeabschnitt (8, 108, 208) der Längsbohrung (3, 102, 203) eine Stellschraube (9, 109, 209) angeordnet ist und sowohl die Druck- als auch die Stellschraube beim Anziehen die Druckstücke gegen den Spannbolzen bewegen, der einen die Schneidplattenbohrung radial übergreifenden Bolzenkopf (25, 125, 225) aufweist, wobei die Hohlkehlenaussparung und das vorderste Druckstück so ausgebildet sind, daß der Bolzenkopf beim Anziehen nach unten gezogen wird.

2. Klemmhalter nach Anspruch 1, dadurch gekennzeichnet, daß die Längs- und die Querbohrung (2, 3; 102, 103; 202, 203;) schräg verlaufen und einen Winkel von weniger als 90° einschließen.

3. Klemmhalter nach Anspruch 1 oder 2, dadurch gekennzeichnet, daß die Querbohrung (2, 102, 202,) als Sackbohrung ausgebildet ist.

4. Klemmhalter nach einem oder mehreren der Ansprüche 1 bis 3, dadurch gekennzeichnet, daß der Bolzen einen in eine Kugelpfanne (26, 126, 226,) der Bohrung (20, 120, 220,) der Schneidplatte (17, 117, 217,) eingreifenden Kalottenkopf (25, 125, 225,) aufweist.

5. Klemmhalter nach einem oder mehreren der Ansprüche 1 bis 4, dadurch gekennzeichnet, daß sich der Hohlkehlenaussparung (21, 121, 221,) des Bolzens (18, 118, 218,) ein ballengriffartig geformter Endabschnitt (22, 122, 222,) anschließt und auch der Abschnitt des Bolzens oberhalb der Hohlkehlenaussparung (21, 121, 221,) ballig ist.

6. Klemmhalter nach einem oder mehreren der Ansprüche 1 und 3 bis 5, dadurch gekennzeichnet, daß die Querbohrung (102, 202,) bei einer gerade verlaufenden Längsbohrung (103, 203, 303) unter einem Winkel (204, bzw. 31,) zur Vertikalachse (205) bzw. zur Horizontalachse (107,) verläuft.

7. Klemmhalter nach einem oder mehreren der Ansprüche 1 bis 6, dadurch gekennzeichnet, daß die Abzweigbohrung (113,) in die Querbohrung (102,) mündet.

8. Klemmhalter nach Anspruch 7, dadurch gekennzeichnet, daß die Querbohrung (102,) schräg zur Abzweigbohrung (113,) verläuft.

9. Klemmhalter nach einem oder mehreren der Ansprüche 1 bis 8, dadurch gekennzeichnet, daß das Druckstück (10, 11; 110, 111; 210, 211;) einen mit der Hohlkehlenaussparung (21, 121, 221,) korrespondierenden Kugelkopf aufweist.

10. Klemmhalter nach einem oder mehreren der Ansprüche 1 bis 9, dadurch gekennzeichnet, daß das Druckstück (10, 11; 110, 111; 210, 211;) aus zumindest einem gleitbeweglich in der Längsbohrung (3, 103, 203,) geführten Distanzstift (10, 110, 210,) und mehreren in der Längsbohrung zwischen der Querbohrung (2, 102, 202,) und dem Distanzstift angeordneten Kugeln (11, 111, 211, 311; 11b, 111b, 211b,) sowie in der Abzweigbohrung (13, 113, 213,) angeordneten Kugeln (11, 11a, 111, 111a, 211, 211a,) besteht.

11. Klemmhalter nach Anspruch 10, dadurch gekennzeichnet, daß der Durchmesser der Längsbohrung (3, 103, 203,) oder der Abzweigbohrung (113,) im Mündungsbereich (28, 128, 228, 328) zur Querbohrung (2, 102, 202,) kleiner als der Durchmesser der Kugeln ist.

12. Klemmhalter nach einem oder mehreren der Ansprüche 1 bis 11, gekennzeichnet durch Schneidplattensitze (219,) für zumindest zwei parallel mit Abstand nebeneinander angeordnete Wendeschneidplatten (217,).

13. Klemmhalter nach einem oder mehreren der Ansprüche 1 bis 12, gekennzeichnet durch eine in der Schneidplatte vorgesehene Durchgangsbohrung (20, 120, 220,) mit Kugelpfannen (26, 126, 226,).

## Claims

1. Toolholder (1, 100, 200) with a blanking die, in particular with an indexable insert (17, 117, 217) which has a longitudinal hole and a branch hole (3, 13, 103, 113, 203, 213) running into it, and thrust pieces filled up in the holes (3, 13, 103, 113, 203, 213) and possesses a pressure screw (14, 114, 214) in the branch hole which moves the thrust pieces against a straining bolt (18, 118, 218) which is inserted through a blanking die hole (20, 120, 220), ends in a cross hole (2, 102, 202), and shows a channel relief (21, 121, 221) and has a smaller diameter than the cross hole, distinguishing by the feature that a locking screw (9, 109, 209) is located in a screw thread section (8, 108, 208) at the end of the longitudinal hole (3, 103, 203) and when tightened, the pressure screw as well as the locking screw move the thrust pieces against the straining bolt which has a bolt head (25, 125, 225) lapping radially over the blanking die hole, and the channel relief and the formost thrust piece are formed in such a way that in the course of the tightening the bolt head is pulled downwards.

2. Toolholer according to claim 1, distinguishing by the feature that the longitudinal and the cross hole (2, 3; 102, 103; 202, 203) run at a slant angle and include an angle of less than 90°.

3. Toolholder according to claim 1 or 2, distinguishing by the feature that the cross hole (2, 102, 202) is formed as a pocket hole.

4. Toolholer according to one or more of the claims 1 to 3, distinguishing by the feature that the bolt shows a dome shaped head (25, 125, 225) engaging in a ball socket (26, 126, 226) of the hole (20, 120, 220) of the blanking die (17, 117, 217).

5. Toolholer according to one or more of the claims 1 to 4, distinguishing by the feature that the channel relief (21, 121, 221) of the bolt (18, 118, 218) is adjacent to an end section (22, 122, 222) formed like a machine handle and that the section of the bolt above the channel relief (21, 121, 221) is crowned as well.

6. Toolholder according to one or more of the claims 1 and 3 to 5, distinguishing by the feature that with a straight running longitudinal hole (103, 203, 303) the cross hole (102, 202) forms an angle (204 or 31, respectively) with the vertical axis (205) or with the horizontal axis (107, respectively.

7. Toolholder according to one or more of the claims 1 to 6, distinguishing by the feature that the branch hole (113) ends in the cross hole (102).

8. Toolholder according to claim 7, distinguishing by the feature that the cross hole (102) runs at a slant angle to the branch hole (113).

9. Toolholder according to one or more of the claims 1 to 8, distinguishing by the feature that the thrust piece (10, 11; 110, 111; 210, 211) has a ball head corresponding with the channel relief (21, 121, 221).

10. Toolholder according to one or more of the claims 1 to 9, distinguishing by the feature that the thrust piece (10, 11; 110, 111; 210, 211) consists of at least one spacer pin (10, 110, 210) which is able to slide in the longitudinal hole (3, 103, 203) and of several balls (11, 111, 211, 311; 11b, 111b, 211b) which are located in the longiutinal hole between the cross hole (2, 102, 202) and the spacer pin, as well as of balls (11, 11a, 111, 111a, 211, 211a) which are located in the branch hole (13, 113, 213).

11. Toolholder according to claim 10, distinguishing by the feature that the diameter of the longitudinal hole (3, 103, 203) or of the branch hole (113) in the entry area (28, 128, 228, 328) into the cross hole (2, 102, 202) is smaller than the diameter of the balls.

12. Toolholder according to one or more of the claims 1 to 11, distinguishing by blanking die receptables (219) for at least two indexable inserts (217) arranged in parallel and with a distance.

13. Toolholder according to one or more of the claims 1 to 12, distinguishing by a through hole (20, 120, 220) with ball sockets (26, 126, 226) provided in the blanking die.

## Revendications

1. Porte-plaquette (1, 100, 200) avec une plaquette coupante, notamment une plaquette réversible (17, 117, 217), pourvu d'une forure longitudinale et d'une forure de bifurcation, cette dernière débouchant dans la première (3, 13; 103, 113; 203, 213) et des pièces de pression (10, 11; 110, 111; 210, 211), placées dans les forures (3, 13; 103, 113; 203, 213), ainsi que d'une vis de pression (14, 114, 214) dans la forure de bifurcation, qui, lors du serrage, presse les pièces de pression contre une goupille de serrage (18, 118, 218), laquelle, enfilée dans une forure (20, 120, 220) de la plaquette coupante et aboutissant dans une forure transversale (2, 102, 202), présente une gorge concave (21, 121, 221) et dont le diamètre est plus petit que la forure transversale, caractérisé par le fait qu'une vis de réglage (9, 109, 209) est disposée dans une zone filetée (8, 108, 208) de l'extrémité de la forure longitudinale (3, 102, 203), et que, lors du serrage, la vis de pression ainsi que la vis de réglage meuvent les pièces de pression contre la goupille de serrage, laquelle est purvue d'une tête (25, 125, 225), qui empiète, radialement, sur la forure de la plaquette coupante, la gorge concave et la pièce de pression antérieure étant conçues de sorte que la tête de la goupille soit tirée vers le bas, lors du serrage.

2. Porte-plaquette selon revendication 1, caractérisé par le fait que la forure longitudinale et la forure transversale (2, 3; 102, 103; 202, 203) s'étendent obliquement et forment un angle de moins de 90°.

3. Port-plaquette selon revendication 1 ou 2, caractérisé par le fait que la forure transversale (2, 102, 202) est conçue en forme de trou borgne.

4. Porte-plaquette selon une ou plusieurs revendications 1 à 3, caractérisié par le fait que la goupille de serrage présente une tête à calotte (25, 125, 225) s'enclenchant dans une cuvette rotule (26, 126, 226) de la forure (20, 120, 220).

5. Porte-plaquette selon une ou plusieurs revendications 1 à 4, caractérisé par le fait que la gorge concave (21, 121, 221) de la goupille (18, 118, 218) comprend une zone d'extrémité en forme de poignée bombée (22, 122, 222) et que la partie de la goupille, située au-dessus de la gorge concave (21, 121, 221) est également bombée.

6. Porte-plaquette selon revendications 1 à 3 et 5, caractérisé par le fait que la forure transversale (102, 202) s'entend sous un angle (resp. 204 et 31) par rapport, respectivement, à l'axe vertical (205) et l'axe horizontal (107).

7. Porte-plaquette selon une ou plusieurs revendications 1 à 6, caractérisé par le fait que la forure de bifurcation (113) débouche dans la forure transversale (102).

8. Porte-plaquette selon revendications 7, caractérisé par le fait que la forure transversale (102) s'étend obliquement par rapport à la forure de bifurcation (113).

9. Porte-plaquette selon une ou plusieurs revendications 1 à 8, caractérisé par le fait que la pièce de pression (10, 11; 110, 111; 210, 211) présente une tête sphérique correspondand à la gorge concave (21, 121, 221).

10. Porte-plaquette selon une ou plusieurs revendications 1 à 9, caractérisé par le fait que la pièce de pression (10, 11; 110, 111; 210, 211) est composée d'au moins un écarteur (10, 110, 210), mobile par glissement dans la forure longitudinale (3, 102, 203), et de plusieurs billes (11, 111, 211, 311; 11b, 111b, 211b) disposées dans la forure longitudinale, entre la forure transversale (2, 102, 202) et l'écarteur, ainsi que de billes (11, 11a, 111, 111a, 211, 211a), disposées dans la forure de bifurcation (13, 113, 213).

11. Porte-plaquette selon revendication 10, caractérisé par le fait que le diamètre de la forure longitudinale (3, 103, 203) ou de la forure de bifurcation (113) est plus petit, dans la zone (28, 128, 228, 328) de débouchement dans la forure transversale (2, 102, 202), que le diamètre des billes.

12. Porte-plaquette selon une ou plusieurs revendications 1 à 11, caractérisé par le fait que des logements de plaquette (219) sont prévus pour au moins deux plaquettes réversibles (217) disposées parallèlement à intervalle l'une de l'autre.

13. Porte-plaquette selon une ou plusieurs revendications 1 à 12, caractérisé par le fait qu'une foure traversante (20, 120, 220) avec cuvette rotule (26, 126, 226) est pratiqueée dans la plaquette.
